Europäisches Patentamt

**European Patent Office**

**Office européen des brevets**

(19)

(11) Publication number: **0 235 883**
A1

## EUROPEAN PATENT APPLICATION

(12)

(21) Application number: **87300267.9**

(22) Date of filing: **13.01.87**

(51) Int. Cl.⁴: **H 04 M 9/02,** H 04 M 1/72

(30) Priority: **13.01.86 GB 8600712**

(71) Applicant: **Achievers Company Inc., 352, Ellerslie Avenue, North York Ontario M2R IB9 (CA)**
Applicant: **Orange, John R.S., 44, West Street, Oakville, Ontario (CA)**

(43) Date of publication of application: **09.09.87**
**Bulletin 87/37**

(72) Inventor: **Kirby, William, 5, Burlington Street, Apt. 3, Missisauga Ontario, L4T 1B6 (CA)**

(74) Representative: **Kirk, Geoffrey Thomas, BATCHELLOR, KIRK & EYLES 2 Pear Tree Court Farringdon Road, London EC1R 0DS (GB)**

(84) Designated Contracting States: **ES**

(54) **Telephone intercom device.**

(57) A telephone intercom device utilises a pair of conductors connected between telephones (38) but not to an external line (12, 14). The intercom device connects the telephone to either the external line or the other telephones by a mode selection switch (60) that is operated by a relay. The relay is energised by a manual switch (86), connected in parallel to the telephone to attain the intercom mode and held in the intercom mode by a holding circuit that includes the switch (48) associated with the telephone handset. Replacement of the handset (42) opens the holding circuit and causes the mode selection switch to revert to the external lines. The holding circuit is not functional until the mode selection switch is once again moved to the intercom position by operation of the manual switch.

## TELEPHONE INTERCOM DEVICE

This invention relates to a telephone intercom apparatus.

Many domestic households have two or more telephone extensions installed about the house, but have no facility for intercom between the instruments. The intercom devices that have been available hitherto all offer far more sophisticated a performance than is needed, and are accordingly too expensive for home use.

Telephone systems installed in domestic households are usually provided with four wires looped around the house to the various outlet locations. These wires are conventionally termed and referred to in this specification as the M, N, P and Q wires. Only two of these wires, M and N, are connected to the external telephone wires. Normally, the other two P, Q are redundant.

There have been a number of previous proposals to use the two spare wires in a domestic intercom system.

In Bartelink U.S. Patent 4,485,273 an intercom system is shown which uses a manual switch to change from the external to the intercom wires. This arrangement, however, prevents normal use of the telephone if the switch is left in the intercom position. Bartelink proposes to avoid this by providing a relay to connect the handset to the external wires when the handset of the telephone is replaced but this arrangement has the disadvantage that as soon as the handset is picked up in response to the ringing of an external call, the switch reverts to the intercom position, thereby interrupting the incoming call.

It is an object of the present invention to obviate or mitigate the above disadvantages.

According to the present invention there is provided an intercom device for use with a telephone system having a plurality of telephones interconnected to one another and to an external line by a multiple conductor cable, each of said telephones having a first switch associated therewith to control enabling of said telephone, said device comprising a first pair of conductors to be connected to the conductors of said cable connected to said external line, a second pair of conductors to be connected with a pair of conductors of said cable not connected to said external line, and a third pair of conductors to be connected to a respective one of said telephones and to opposite sides of said first switch, a mode selection switch operable in either a first or second condition to connect said third pair of conductors with said first and second pair of conductors respectively, biasing means to bias said switch to said first condition, switch operating means to condition said mode selection switch to said second condition and holding means associated with said second pair of conductors to maintain said mode selection switch in said second condition, said holding means being disabled upon disablement of said telephone by said first switch to permit said mode selection switch to revert to said first condition, said holding means being inoperable until said switch operating means conditions said mode selection switch to said second condition.

Embodiments of the invention will now be described by way of example only with reference to the accompanying drawings in which:

Figure 1 is a schematic representation of a domestic installation equipped with an intercom;

Figure 2 is an alternative embodiment of the intercom device shown in Figure 1; and

Figure 3 is yet a further embodiment of the intercom device shown in Figure 1.

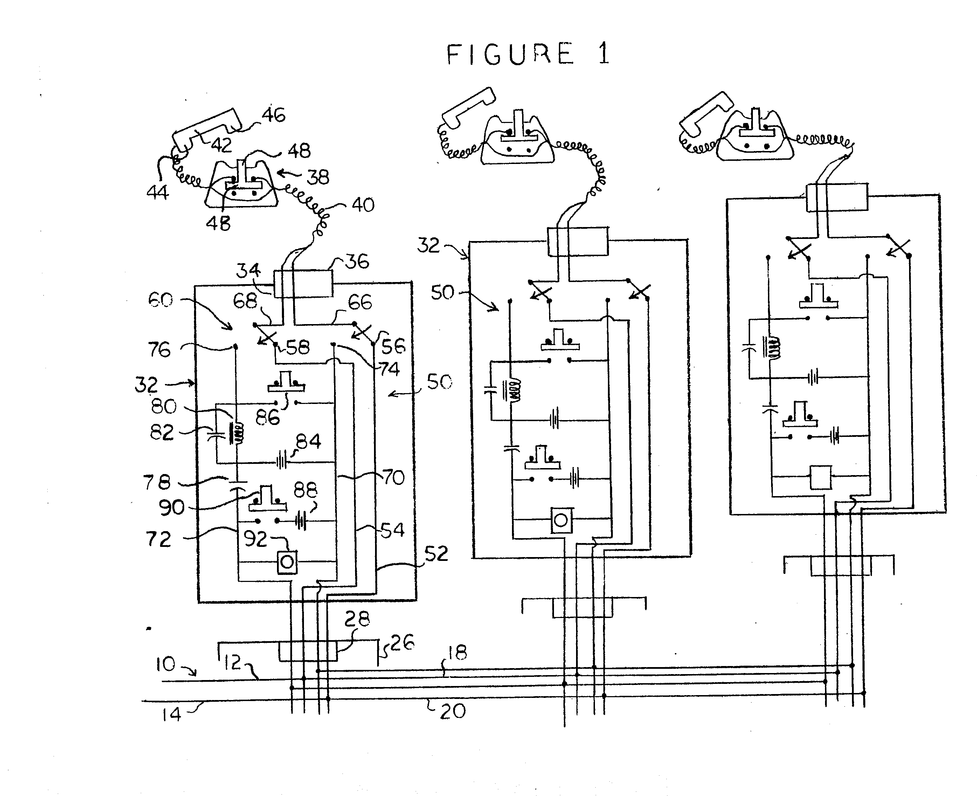

Referring, therefore to Figure 1, an external telephone cable (10) having a pair of conductors (12), (14) normally identified as the M and N conductors, is connected to a two-pair, four-wire cable (16). The cable (16) is formed from a first pair of conductors (18), (20), and a second pair of conductors (22), (24). The cable (16) is looped through the building in which the telephone system is to be installed to terminate at jacks (26) located at convenient locations. Each of the jacks (26) is of conventional structure having a socket (28).

An intercom control circuit box (32) is connected by a plug (30) to each of the jacks at which an intercom facility is required. The box (32) also has a socket (34) of a similar configuration to the socket (28) to receive a plug (36) associated with a telephone handset (38). Each telephone handset (38) is connected to the box (32) through a two-conductor cable (40) that terminates at the plug (36). As is well known and is shown schematically in Figure 1, the telephone (38) has a handset (42) containing a mouthpiece (44) and earpiece (46) and engages a cradle switch (48) whenever the handset (42) is replaced on the telephone. The switch (48) therefore controls enabling of the telephone.

Located within the housing (32) between plug (30) and socket (34) is an intercom control circuit generally designated (50). The control circuit (50) includes a pair of conductors (52), (54) that are connected through the jack (26) to the conductors (18), (20) of the cable (16). The conductors (54) terminate at terminals (56), (58) respectively, of a two-pole relay (60) that selects the mode of operation of the control intercom circuit 50. Contacts (62), (64) in the relay (60) are connected to a pair of conductors (66), (68) which terminate at the socket (34) to be connected to the conductors of cable (40). Relay (60) is biased to the position shown in Figure 1 so that whenever the relay operating circuit is open, the conductors (66), (68) are connected to the external line through the conductors (52), (54).

The circuit (50) includes a second pair of conductors (70), (72) that are connected through the jack (26) to the conductors (22), (24) of cable (16) and extend to a second pair of poles (74), (76) respectively, of the relay (60). Relay (60) is operated by a coil (80) in the conductor (72). A capacitor (78) is incorporated into the conductor (78) prior to the coil (80) and a second capacitor (82) is connected in parallel to the coil (80).

Power for the relay (80) is provided by a battery (84) connected between the conductors (70), (72) and control for the relay is provided by a switch (86) also connected across the conductors (72), (74) in parallel to the relay (60).

A signalling function is provided in the intercom circuit (50) by a power source (88) connected in series with a pushbutton switch (90) which is connected across the conductors (70), (72) on the opposite side of the capacitor (78) to the relay coil (80). A DC buzzer (92) is also connected across the conductors (70), (72) so that a DC voltage applied across the conductors will activate the buzzer.

In operation with the handset (42) at rest on the cradle, the pushbutton (86) is normally open, as is the pushbutton (90). The cradle switch (48) is also open so that the circuit to the relay coil (80) is interrupted and the relay reverts to the position shown in which it connects the conductors (40) to the conductors (58), (56) and thus to the external lines (12), (14). In this position the telephone can be used in the normal manner as lifting the handset (42) from the cradle will not complete a circuit that will energise the coil (80). In this way, external calls can be made or received.

If the intercom feature is to be used the handset is lifted to close the switch (48) and the switch (86) is closed so that the circuit from the battery (84) through the coil (80) is completed. This causes the relay (60) to move to a position in which the contacts (62), (64) make with the conductors (74), (76) to connect the conductors (40) with the conductors (22), (24). When the switch (86) is released, the relay is held in the intercom position by the closed circuit provided by the switch (48). The DC voltage applied by the battery (84) is effective to hold the relay closed until the circuit is once again opened by opening of the cradle switch (48).

In order to signal the other telephones (38) on the circuit, the pushbutton (90) is depressed to complete the circuit from the battery (88) across the conductors (70), (72). This impresses a DC voltage onto the conductors (70), (72) which is also impressed on the corresponding conductors of the other circuits (50). Thus, the buzzer (92) in each of the intercom boxes (32) will sound. To connect the other handsets to the intercom, the respective handset is lifted to close the cradle switch (48) and the pushbutton (86) depressed so that the relay (60) connects the cable (40) to the conductors (22), (24). In this way conversation can be carried out amongst the handsets.

Upon replacement of a handset, the switch is opened which breaks the circuit through the coil (80) and so causes the relay to revert to the position shown in Figure 1 at which the conductors (40) are connected through conductors (56), (58) to the external conductors (12), (14).

Thus, upon return of the handset (42) to the telephone, or indeed simple depression of the switch (48), the telephone system is returned to a condition in which it can be used in a conventional manner to receive incoming or make outgoing calls.

In the event that an incoming call is received and the call is to be transferred to another handset, the circuit provides for a ring signal to be generated in the other handsets whilst the exernal call is being received. This is because the capacitor (78) effectively isolates the signalling circuit from the relay operating circuit so that closing of the switch (90) will not operate the relay. Thus, with the handset (42) removed from the cradle to receive an external call, the switch (90) may be depressed to complete the circuit through the buzzer (92) in the other handsets and thereby attract the attention of another party. The provision of the capacitor (78) ensures that the depression of the button (90) will not activate the relay and interrupt the external call.

A number of advantages flow from the apparatus described in Figure 1. Firstly, the circuit is always reconditioned to receive incoming calls upon completion of the use of the intercom. This is achieved by placing the relay hold circuit in series with the switch (48) with a second switch (86) in parallel. Moreover, as noted above, a signal can be generated on the other handsets even when the normal external call is being received. The signal used is a DC signal as opposed to an AC signal. This results in considerable simplification and at the same times does not interfere with the normal voice communications between adjacent handsets.

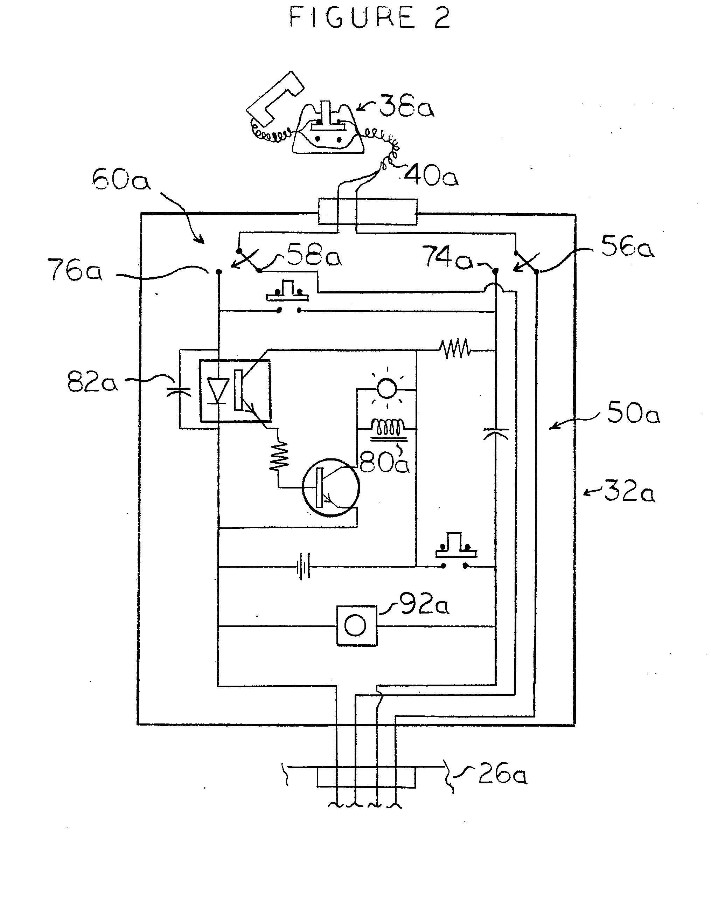

A further embodiment of the circuit shown in Figure 1 is shown in Figure 2. In this embodiment, like reference numerals will be used to identify like components with the suffice 'a' added for clarity. In this arrangement an opto-coupler (100) is used to control current flow through the coil (80) to avoid the need to match the impedence of the coil (80) with that of the telephone handset (42). In the arrangement of Figure 2, when the switch (86) is depressed, current flows from the battery (84) to switch on the opto-coupler (100) and turn on a transistor (102). the relay coil (80) is placed in series with the transistor (102) so that upon the transistor being turned on, the relay coil (80) is operated to move the relay to the intercom position. Once the circuit is opened by depression of the switch (48) on the handset, the relay (60a) returns to the position in which the conductors (40a) are connected to the conductors (70), (72).

The capacitor (82a) and a similar capacitor (104) included in the conductor (70a) permit transmission of the voice frequency voltages to pass along the conductors (70), (72) without rectification by the opto-coupler (100). The capacitors (82a) and (104) also isolate the relay operating circuit from the signalling circuit to ensure that the relay (60a) does not operate when buzzers (90a) are operated. Similarly, to avoid a large current drain when the switch (86a) is depressed, a current-limiting resistor (106) is included in the feed from the conductor (70). It will also be noted that a light (108) is included in parallel with the relay coil (80a) to indicate when the intercom is in use.

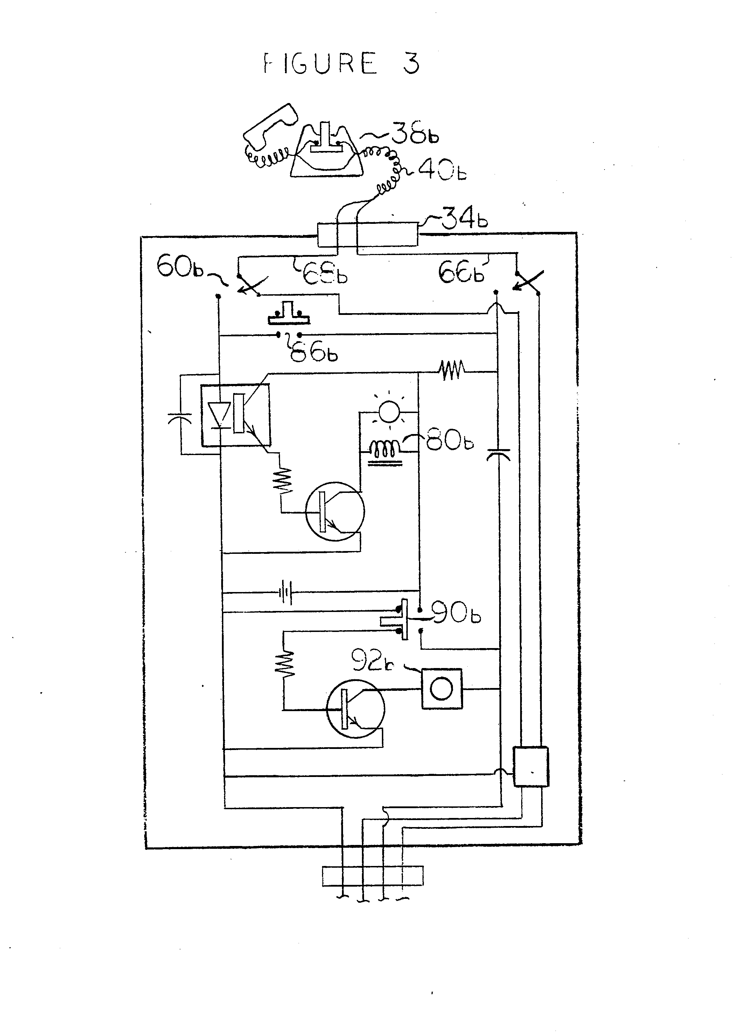

The arrangement shown in Figure 3 is similar to that of Figure 2 with like components identified by the same reference numeral as in Figure 1 by a suffix 'b' added for clarity. In this arrangement, the DC buzzer (92b) is inhibited when the call is initiated from the associated intercom device (32b). In this arrangement, the single pole switch (90) in Figure 1 is replaced by a double pole switch (92b) that, in its normal position, makes the circuit that includes the buzzer (92b). However, upon movement of the switch to a position to signal on other handsets, the branch of the circuit including the buzzer in the intercom station is isolated, although a DC voltage is still applied across the conductors (70), (72). In the embodiment of Figure 3 a ring detector (110) is included in the conductors (54), (52) to generate a voice frequency tone in the conductors (70), (72) when a ring tone is received on the lines (52), (54). In this way the user of the handset in the intercom mode will be aware of an incoming call on the external lines (12) and (14).

It will be seen therefore that in each arrangement a very simple yet effective intercom device is provided which has the facility for reverting to the normal telephone use once the handset is replaced on the telephone. Moreover, the application of a simple DC voltage on to actuate the signal at each intercom station obviates the need for complicated frequency detection circuits and will not interfere with voice signal transmission.

CLAIMS:

1. An intercom device for use with a telephone system having a plurality of telephones interconnected to one another and to an external line by a multiple conductor cable, each of said telephones having a first switch associated therewith to control enabling of said telephone, said device comprising a first pair of conductors to be connected to the conductors of said cable connected to said external line, a second pair of conductors to be connected with pair of conductors of said cable not connected to said external line, and a third pair of conductors to be connected to a respective one of said telephones and to opposite sides of said first switch, a mode selection switch operable in either a first or second condition to connect said third pair of conductors with said first and second pair of conductors respectively, biasing means to bias said switch to said first condition, switch operating means to condition said mode selection switch to said second condition and holding means associated with said second pair of conductors to maintain said mode selection switch in said second condition, said holding means being disabled upon disablement of said telephone by said first switch to permit said mode selection switch to revert to said first condition, said holding means being inoperable until said switch operating means conditions said mode selection switch to said second condition.

2. An intercom device according to claim 1 including a signalling circuit to generate a signal on said second pair of conductors to operate a signalling device in each of said devices connected to said cable.

3. An intercom device according to claim 2 wherein said signalling circuit is electrically isolated from said switch operating means to prevent operation thereof upon generation of said circuit.

4.      An intercom device according to claim 3 wherein said signalling circuit includes a DC power supply and a switch to impose a DC signal across said second pair of conductors.

5.      An intercom device according to claim 3 wherein said switch operating means is in parallel to said third pair of conductors and said holding means includes a power source, said switch operating means controlling a circuit including said power source to condition said mode selection switch to said second condition and said power source being connected in series with said third pair of conductors and thereby said first switch to maintain said mode selection switch in said second condition when said first switch is operable to enable said telephone.

6.      An intercom device according to claim 5 wherein said mode slection switch to relay operated and the coil of said relay is energised by said power source by closing of said switch operating means and is maintained energised by said mode selection switch being in said second condition and said first switch enabling said telephone.

7.      An intercom device according to claim 3 wherein the signalling circuit includes a manually operable switch and the signalling device is disconnected from the signalling circuit upon movement of the switch to initiate a signal on the signalling circuit.

FIGURE 1

# FIGURE 2

FIGURE 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 485 273 (BARTELINK) <br> * Column 2, lines 36-59; column 3, lines 21-41; column 4, lines 25-68; column 5, lines 19-37 * | 1.-2 | H 04 M 9/02 <br> H 04 M 1/72 |
| | --- | | |
| A | US-A-4 196 317 (BARTELINK) <br> * Column 2, line 17 - column 3, line 2 * | 1 | |
| | --- | | |
| P,X | US-A-4 588 861 (TEICH)(13-05-1986) <br> * Column 1, lines 32-55; column 2, lines 26-60; column 5, lines 15-68 * | 1 | |
| | ----- | | |

TECHNICAL FIELDS SEARCHED (Int. Cl.4)

H 04 M

The present search report has been drawn up for all claims

| Place of search | Date of completion of the search | Examiner |
|---|---|---|
| THE HAGUE | 18-03-1987 | VANDEVENNE M.J. |